# EUROPÄISCHE PATENTSCHRIFT

(11) **EP 0 432 618 B1**
(45) Veröffentlichungstag und Bekanntmachung des Hinweises auf die Patenterteilung: **08.03.1995**
(21) Anmeldenummer: 90123267.8
(22) Anmeldetag: 05.12.1990
(51) Int. Cl.: G02B 23/02, G02B 23/16, G02B 17/08

(54) **Spiegelteleskop**
Mirror telescope
Télescope à miroir

(30) Priorität: 12.12.1989 DE 3940924
(43) Veröffentlichungstag der Anmeldung: 19.06.1991
(73) Patentinhaber: Carl Zeiss, D-89520 Heidenheim (Brenz) (DE); CARL ZEISS-STIFTUNG HANDELND ALS CARL ZEISS, D-89518 Heidenheim (Brenz) (DE)
(72) Erfinder: Schubert, Hermann, W-7925 Ballmertshofen (DE); Juranek, Hans-Joachim, Dr., W-7080 Aalen-Waldhausen (DE)

(56) Entgegenhaltungen:
- EP-A- 0 315 030
- WO-A-87/05451
- FR-A- 2 449 380

## Beschreibung

Bei der Erfindung handelt es sich um ein Spiegelteleskop mit einem Haupt- und einem Sekundärspiegel, wobei die Entfernung der beiden Spiegel durch einen Tubus festgelegt ist und der Sekundärspiegel sich an einem Frontring befindet.

Spiegelteleskope haben aplanatische Spiegelsysteme und werden gelegentlich auch als komafreie Spiegelfernrohre bezeichnet. Sie werden vornehmlich für astrophotographische Zwecke verwendet und zeichnen sich durch eine Erfüllung der Sinusbedingung aus, wodurch ein größeres Bildfeld komafrei wird. Bei den Spiegelteleskopen dient als Objektiv ein Hohlspiegel oder ein zusammengesetztes Spiegelsystem. Zur Vermeidung der sphärischen Aberration ist der Hauptspiegel als Parabolspiegel ausgebildet. Ein wichtiger Vorteil der Spiegelteleskope ist deren Freiheit von chromatischer Aberration. Spiegelteleskope lassen sich mit weit größeren Objektivdurchmessern herstellen als Linsenfernrohre, wobei das Öffnungsverhältnis wegen des Fehlens von Restfehlern auf der optischen Achse (sekundäre Spektrum, Öffnungsfehler) wesentlich größer sein darf.

Ein Nachteil der Spiegelteleskope ist deren große Empfindlichkeit hinsichtlich der Justierung; insbesondere, wenn die optische Qualität über mehrere Jahre ohne Nachfokussierung erhalten bleiben muß und unabhängig von Temperaturänderungen, Schüttelbelastung und Materialalterung sein soll (z.B. bei einem Einsatz in unzugängliche Baugruppen, wie es Satelliten sind).

Der vorliegenden Erfindung liegt nun die Aufgabe zugrunde, ein Spiegelteleskop zu schaffen, welches seine optische Qualität über mehrere Jahre ohne Nachfokussierung beibehält und bei welchem man deshalb auf eine schwere und voluminöse und notwendigerweise mit einer bestimmten Ausfallwahrscheinlichkeit behafteten Nachfokussierungseinrichtung verzichten kann.

Diese Aufgabe wird erfindungsgemäß durch ein Spiegelteleskop nach dem kennzeichnenden Teil des ersten Patentanspruches gelöst.

Indem man sowohl die Spiegel als auch die die Distanz festlegenden Bauteile aus demselben Material fertigt, erreicht man, daß bei einer möglicherweise durch äußere Einflüsse eintretenden geometrischen Gesamtänderung (Temperatur, Alterung) alle optischen Eigenschaften (z.B. Lage des Fokus in erster Näherung) erhalten bleiben. Damit entfällt aber die Notwendigkeit einer Nachfokussierung. Um diese Gesamtänderungen als solche möglichst gering zu halten, ist der Aufbau des Spiegelteleskops aus einer möglichst geringen Bauteileanzahl vorteilhaft.

Als Material eignet sich insbesondere Zerodur, welches ein geringes Gewicht (2,7 gr pro cm³) aufweist, sich insbesondere als Spiegelbaustoff hervorragend bewährt hat und einen geringen thermischen Ausdehnungskoeffizienten hat.

Die minimale Anzahl der Bauteile ergibt sich aus dem verwendeten Spiegelteleskopsystem. Verwendet man ein Spiegelteleskop nach Cassegrain (welches als besonderen Vorteil eine sehr kurze Baulänge hat), so benötigt man mindestens einen Hauptspiegel mit Stützstruktur, einen Tubus, einen Frontring mit Spider und Sekundärspiegelfassung und einen Sekundärspiegel als mechanische Bauteile sowie ein Okular als Baugruppe. Eine weitere Minimierung der Bauteile erhält man, wenn man den Frontring direkt mit dem Sekundärspiegel fertigt. Diese Herstellung ist zwar fertigungstechnisch schwieriger, verringert aber die Anzahl der Bauteile und umgeht insbesondere die relativ schwierige Befestigung des Sekundärspiegels an der Sekundärspiegelfassung des Frontringes.

Nachdem man die Teile zueinander justiert hat, werden sie vorteilhafterweise miteinander verklebt. Dieses Verkleben sollte dabei möglichst neben den mechanischen Berührungspunkten erfolgen, um die Justierung durch das Verkleben nicht zu verschlechtern.

Das erfindungsgemäße Teleskop kann bevorzugt als optische Sende- und Empfangsantenne dienen. Der Übergang bei der Datenübertragung von Mikrowellen zu Infrarotwellen hat dabei mehrere Vorteile:
- kleinere Bauart der Antennen,
- höhere Übertragungsrate und
- geringere Leistungsaufnahme beim Sendebetrieb.

In den nachfolgenden Figuren wird die Erfindung anhand von zwei Ausführungsbeispielen näher erläutert, wobei dem besseren Verständnis dienende Erläuterungen und Ausgestaltungsmöglichkeiten des Gedankens der Erfindung beschrieben sind.

Es zeigen
- Fig. 1: ein Spiegelteleskop mit seinen fünf Einzelteilen;
- Fig. 2: ein zusammengebautes Spiegelteleskop mit vier Einzelteilen.

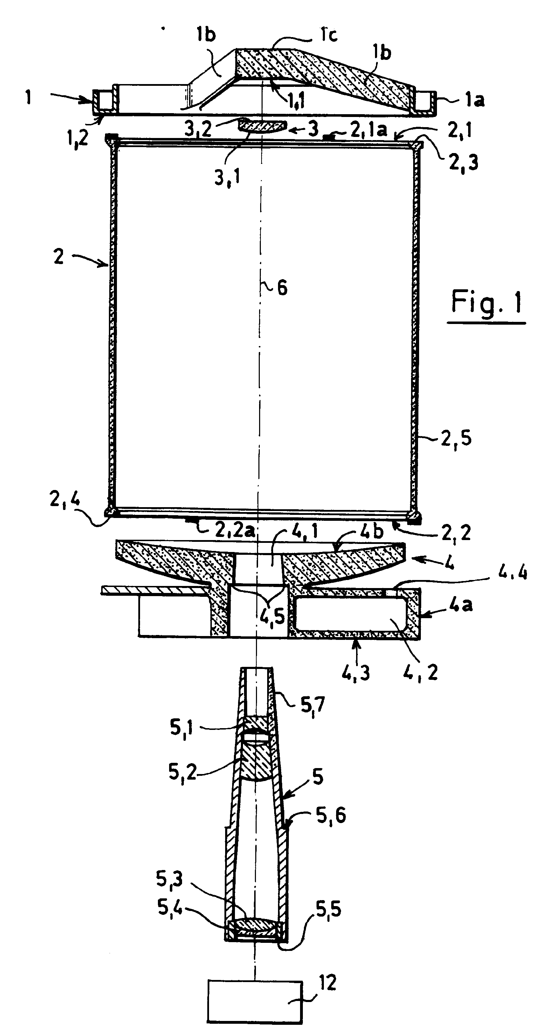

Als in der Figur 1 dargestellte erfindungsgemäße Spiegelteleskop ist als Explosionszeichnung im Aufriß dargestellt. Die wesentlichen Gesichtspunkte bei dieser Konstruktion des Spiegelteleskops sind eine sehr hohe optische Qualität der Abbildung ohne Nachfokussierung auch nach mehreren Jahren, sowie eine kurze Baulänge und ein möglichst geringes Gewicht bei ausreichender Festigkeit insbesondere gegen Zugspannungen.

Das Spiegelteleskop besteht aus einem Frontring (1), welcher auf einem Tubus (2) aufgesetzt wird. Der Frontring (1) hat einen umlaufenden, u-förmigen Kreisring (1a), welcher nach oben offen ist und dessen innerer Kreisringseite etwas höher gezogen ist als dessen äußere Kreisringseite. Die Seiten des Kreisringes (1a) haben alle dieselbe Wandstärke. An der nach innen gerichteten, inneren Kreisringseite sind drei Spider (1b) angebracht, deren Anlageflächen sich an der nach innen gerichteten, zur Befestigung dienenden inneren Kreisringseite aus Stabilitätsgründen etwas verbreitern. Die Wandstärke der Spider (1b) entspricht dabei der Wandstärke der Seiten des Kreisringes (1a). Die Spider (1b) haben einen Neigungswinkel α relativ zur Grundfläche des Kreisringes (1a) von ungefähr 15°. Die Breite der Spider (1b) ist fast auf ihrer gesamten Länge gleich.

Im Zentrum des Kreisringes (1a) befindet sich eine Sekundärspiegelfassung (1c), welche durch Spider (1b) gehalten wird. Die Sekundärspiegelfassung (1c) besteht aus einem massiven runden Materialblock, dessen Durchmesser etwas kleiner ist als der Durchmesser des Sekundärspiegels (3). Damit der Sekundärspiegel (3) aber dennoch an der Sekundärspiegelfassung (1c) befestigt werden kann, sind die Spider (1b) so ausgeführt, daß sie von der Sekundärspiegelfassung (1c) zuerst waagerecht abgehen und erst dann abknicken, wenn um die Sekundärspiegelfassung (1c) ein ausreichender Raum für die Befestigung des Sekundärspiegels (3) vorhanden ist. Die Unterseite (1.1) der Sekundärspiegelfassung liegt etwas höher als die Oberkante des Kreisringes (1a) und zwar um so viel, daß die Unterseite (3.1) des Sekundärspiegels (3) genau mit der Oberkante des inneren Kreisringes (1a) abschließt, wenn der Sekundärspiegel (3) mit seiner planen Oberfläche (3.2) an der Planunterseite (1.1) der Sekundärspiegelfassung (1c) angebracht ist. Der Sekundärspiegel (3) wird dabei so ausgerichtet, daß seine optische Achse (6) genau mit der Flächennormalen der unteren Seite (1.2) des Kreisringes (1a) übereinstimmt.

Der Frontring (1) mit angebrachtem Sekundärspiegel (3) wird dann auf den Tubus (2) aufgesetzt. Auf dem Tubus (2) befinden sich auf beiden, verdickt ausgeführten Kreisringen (2.1,2.2) jeweils drei erhabene Berührungsflächen bzw. -punkte (2.1a,2.2a). Die an dem oberen Ende (2.1) des Tubus (2) befindlichen Berührungsflächen (2.1a) dienen als mechanische Berührungspunkte (2.1a) für den Frontring (1). Nachdem alle Teile des Teleskops zueinander ausgerichtet sind, wird der Tubus (2) mit dem Frontring (1) durch Auffüllen des Zwischenraumes zwischen den drei Berührungsflächen (2.1a) mit einem geeigneten Kleber miteinander verklebt.

Der Tubus (2) ist ein Hohlzylinder mit Kreisringflächen (2.3,2.4), auf welchen die jeweils drei erhabenen Berührungsflächen (2.1a,2.2a) angebracht sind. Die Wandstärke der seitlichen Umhüllung (2.5) entspricht dabei der Wandstärke der Seiten des Kreisringes (1a).

Die unteren Berührungsflächen (2.2a) des Tubus (2) dienen als Berührungspunkte (2.2a) für die Basisplatte (4). Nach der Ausrichtung wird der Zwischenraum zwischen den Berührungspunkten (2.2a) mit einem geeigneten Kleber aufgefüllt und so die Basisplatte (4) relativ zum Tubus fixiert.

Die Basisplatte (4) besteht aus einer Stützkonstruktion (4a) und einem Hauptspiegel (4b), wobei bei beiden in der Mitte eine genügend große Öffnung (4.1) für das später einzuschiebene Okular (5) vorhanden ist. In der Bohrung (4.1) befindet sich ein Absatz (4.5), um die Bewegung des Okulars (5) in das innere des Tubus (2) zu begrenzen. Die Stützstruktur (4a) unter dem Hauptspiegel (4b) besteht aus drei in einem Kreis angeordneten Hohlkörpern (4.2), wobei die Hohlkörper (4.2) zueinander den gleichen Abstand haben. Die Flächennormale der unteren Fläche (4.3) der Hohlkörper (4.2) stimmt mit der optischen Achse (6) überein. Die Hohlkörper (4.3) haben Entlüftungsbohrungen (4.4) an ihrer Oberseite.

Das Okular (5) besitzt mehrere Linsen (5.1,5.2,5.3,5.4). Außerdem besitzt die Hülle (5.7) einen Absatz (5.6), der mit dem Absatz (4.5) der Öffnung (4.1) der Basisplatte (4) korrespondiert. Nachdem die beiden vorderen Linsen (5.1,5.2) in dem Okular (5) befestigt sind, werden die beiden hinteren Linsen (5.3,5.4) in einer separaten Fassung (5.5) in das Okular (5) eingeschoben und festgelegt. Danach wird das Okular (5) in die Öffnung (4.1) der Basisplatte (4) eingeschoben, bis sich die beiden Absätze (5.6,4.5) berühren. Dann wird das Okular (5) durch einen geeigneten Kleber in der Öffnung festgelegt.

Alle Teile des Teleskops (1,2,3,4,5) sind aus demselben Werkstoff gefertigt. Lediglich die Linsen (5.1-5.4) des Okulars (5) müssen aus einem Werkstoff sein, welcher für die verwendete Wellenlänge transparent ist. Als Werkstoff für die Teile des Teleskops (1,2,3,4,5) eignet sich insbesondere Zerodur, welches aufgrund seines geringen spezifischen Gewichts (2,7gr/cm³) und seines minimalen Temperaturausdehnungskoeffizienten besondere Vorteile bietet und möglichst aus einer Charge stammen sollte.

Bei der Montage des Teleskops wird zuerst der Sekundärspiegel (3) an der Sekundärspiegelfassung (1c) des Frontringes (1) ausgerichtet und befestigt. Danach erfolgt die Ausrichtung des Sekundärspiegels (3) relativ zum Hauptspiegel (4b) durch eine Polierjustierung mit anschließender Verklebung. Dabei wird an den jeweils drei erhabenen Berührungsflächen (2.1a,2.2a) an den Enden (2.1,2.2) des Tubus (2) durch Läppen eine Justierung des Frontringes (1) mit angebrachtem Sekundärspiegel (3) zur Basisplatte (4) mit dem Hauptspiegel (4b) im 1/10»m-Bereich vorgenommen. Dies ermöglicht es, die zulässige Entfernungstoleranz zwischen dem Hauptspiegel (4b) und dem Sekundärspiegel (3) durch z.B. thermische Einflüsse oder nach einem Schock kleiner als 2»m zu halten. Nach erfolgter Justierung wird der Bereich zwischen den erhabenen Berührungsflächen (2.1a,2.2a) mit einem geeigneten Kleber aufgefüllt. Die Eignung eines Klebers für diese Anwendung besteht in einem, den Teilen (1,2,3,4,5) des Teleskops angepaßten thermischen Ausdehnungskoeffizienten und in einer hohen Alterungsbeständigkeit des Klebers. Zuletzt wird das Okular (5) in die Öffnung (4.1) der Basisplatte (4) eingeschoben. Dabei ist darauf zu achten, daß parallele Eingangsstrahlenbündel des Teleskops das Okular (5) als auch parallele Ausgangsstrahlenbündel verlassen.

Das in Fig. 1 dargestellte Teleskop hat einen Hauptspiegeldurchmesser von ungefähr 250 mm, einen Gesamtdurchmesser von ungefähr 310 mm und im zusammengebauten Zustand eine Gesamtlänge von ungefähr 450 mm bei einem Gewicht von kleiner als 8,5 kg. Es eignet sich insbesondere als Antenne/Sender für eine optische Telekommunikation im Weltraum. Daraus resultieren auch die sehr hohen Forderungen an die Justierung der Teile (1,2,3,4,5) des Teleskops, welche über mindestens 10 Jahre ohne Nachfokussierung erhalten bleiben muß. Das bei dem Teleskop verwendete Cassegrain-System mit Okular (5) erlaubt insbesondere die sehr kurze Bauweise, welche ihrerseits zu einer beträchtlichen Gewichtseinsparung führt. Die Öffnung des Hauptspiegels beträgt 1:1,5.

Hinter dem Okular (5) ist eine optische Empfangs- und Sendereinrichtung (12) nach dem bekannten Stand der Technik angeordnet, welche mit Teilen des Systems in Verbindung steht, in welches das Teleskop eingebaut ist.

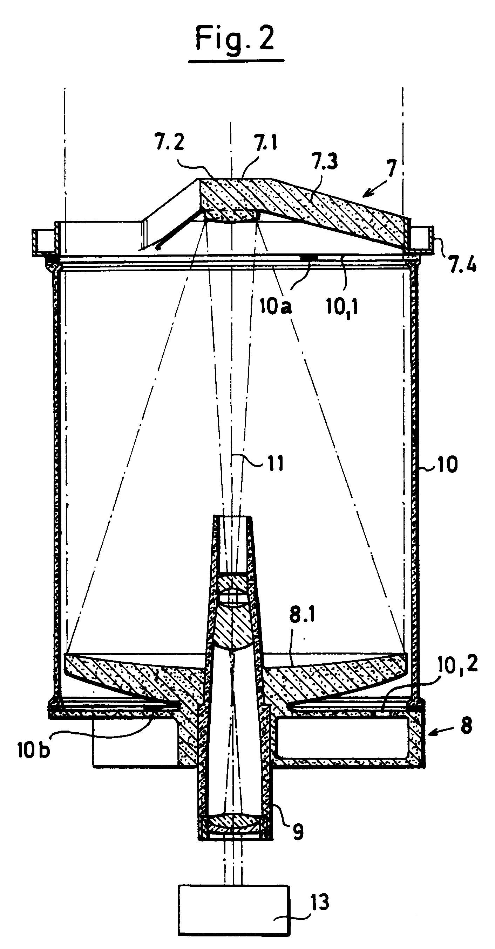

In Fig. 2 ist nun ein Teleskop im zusammengebauten Zustand dargestellt. Dabei wurde im Gegensatz zu Fig. 1 allerdings die Sekundärspiegelfassung (7.1) und der Sekundärspiegel (7.2) zusammen mit den Spidern (7.3) und dem Kreisring (7.4) als monolithischer Frontring (7) ausgeführt. Wie in Fig. 1 hat dieser Sekundärspiegel (7.2) eine konvexhyperbolische Form, wobei einer seiner Brennpunkte mit dem Brennpunkt des Hauptspiegels (8.1) zusammenfällt. Der zweite Brennpunkt des Sekundärspiegels (7.1) befindet sich in der Nähe der zentralen Bohrung des Hauptspiegels (8.1), aus welchem das Okular (9) herausragt. Mit dem Okular (9) kann das sekundäre Bild als umgekehrtes Bild beobachtet werden. Ein reelles Zwischenbild kommt vor dem Okular (9) nicht zustande. Bei dem Teleskop ist die Äquivalenzbrennweite des zusammengesetzten Systems größer als die Brennweite des Hauptspiegels (8.1), trotz der kurzen Baulänge.

Durch den monolithischen Frontring (7) mit Sekundärspiegel (7.1) reduziert sich die Zahl der zum Bau des Teleskops benötigten Teile auf drei zuzüglich des Okulars (9) als Baugruppe. Diese fertigungstechnisch schwierigere Lösung führt zu einer Verringerung der Gefahr einer Dejustage und umgeht die Probleme der Befestigung des Sekundärspiegels (7.2) an der Sekundärspiegelfassung (7.1). Die in dieser Darstellung gezeigten Zwischenräume (10.1,10.2) zwischen dem Frontring (7) und dem Tubus (10) sowie dem Tubus (10) und der Basisplatte (8) sind mit Kleber aufgefüllt. Um die Zwischenräume (10.1,10.2) und die Berührungsflächen (10a,10b) darstellen zu können, sind sie in Fig. 2 überdimensional dargestellt. Außerdem ist in Fig. 2 der Strahlengang des Teleskops mit der optischen Achse (11) dargestellt.

Das Teleskop arbeitet im Infraroten bei ungefähr 825 nm. Der Übergang von den üblicherweise verwendeten Mikrowellen zu Infrarotwellen führt zu mehreren Vorteilen: kleinere Bauart, höhere Übertragungsrate und damit Übertragung von mehr Information pro Zeiteinheit sowie eine geringere Leistungsaufnahme beim Sendebetrieb (mW-Bereich im Gegensatz zu Watt-Bereich). Damit eignet sich das Teleskop hervorragend für Übertragungen im außeratmosphärischen Bereich. Zur Durchführung von Sendungen und dem Empfang von Infrarotsignalen ist hinter dem Okular (9) eine optische Empfangs- und Sendeeinrichtung (13) nach dem bekannten Stand der Technik angeordnet. Diese Einrichtung (13) besteht mit weiteren, hier nicht eingezeichneten Teilen des Baukörpers in Verbindung, in welches das Spiegelteleskop eingebaut ist.

## Patentansprüche

1. Spiegelteleskop mit einem Haupt- und einem Sekundärspiegel, mit einem Tubus und mit Mitteln zur Halterung des Sekundär- und des Hauptspiegels am Tubus, wobei die Entfernung der beiden Spiegel durch die Mittel zur Halterung und den Tubus festgelegt ist, dadurch gekennzeichnet, daß der Haupt- (4b; 8.1) und der Sekundärspiegel (3; 7.2), der Tubus und, soweit sie die Entfernung der Spiegel (4b, 8.1; 3, 7.2) festlegen und beeinflußen, die Mittel zur Halterung (4a, 8; 1, 1a, 1b, 1c, 7, 7.1, 7.2, 7.3, 7.4) aus demselben Material hergestellt sind.

2. Spiegelteleskop nach Anspruch 1, dadurch gekennzeichnet, daß das Material Zerodur ist.

3. Spiegelteleskop nach Anspruch 1 oder 2, dadurch gekennzeichnet, daß als separate Baugruppen ein Frontring (1; 7) mit Sekundärspiegelhalterung (1c; 7.2) zur Halterung des Sekundärspiegels (3; 7.1), eine Basisplatte (4; 8) mit dem Hauptspiegel (4b; 8.1), der Tubus (2; 10) und ein Okular (5; 9) vorhanden sind.

4. Spiegelteleskop nach Anspruch 3, dadurch gekennzeichnet, daß der Frontring (7) mit der Sekundärspiegelfassung (7.2) und dem Sekundärspiegel (7.1) ein einziges monolithisches Bauteil ist.

5. Spiegelteleskop nach einem der Ansprüche 1 - 4, dadurch gekennzeichnet, daß das Spiegelteleskop als ein Cassegrain-System ausgebildet ist.

6. Spiegelteleskop nach einem der Ansprüche 1 - 5, dadurch gekennzeichnet, daß sowohl die Teile (1, 2, 3, 4; 7, 8, 10) als auch das Okular (5; 9) zur Fixierung ihrer Lage zueinander miteinander verklebt sind, soweit sie nicht gemeinsam als monolithisches Teil gefertigt sind.

7. Spiegelteleskop nach einem der Ansprüche 1 - 6, dadurch gekennzeichnet, daß jeweils drei Berührungspunkte (2.1a, 2.2a; 10a, 10b) an den Enden des Tubus (2; 10) vorhanden sind, mit welchen eine Festlegung der Entfernung zwischen dem Sekundärspiegel (3; 7.1) und dem Hauptspiegel (4b; 8.1) und eine Ausrichtung der beiden Spiegel (3,4b; 7.1, 8.1) zu einer gemeinsamen optischen Achse (6; 11) erfolgt.

8. Spiegelteleskop nach Anspruch 7, dadurch gekennzeichnet, daß die Flächen auf dem Kreisumfang des Tubus (2; 10) neben den Berührungspunkten (2.1a, 2.2a; 10a, 10b) als Klebefläche verwendet sind.

9. Spiegelteleskop nach einem der Ansprüche 1 - 8, dadurch gekennzeichnet, daß hinter dem Okular (5; 9) eine optische Empfangs- und Sendeeinrichtung (12; 13) angeordnet ist.

## Claims

1. A mirror telescope with a primary mirror and a secondary mirror having a tubus with means for accommodating said primary and said secondary mirror thereon, whereby the spacing between said mirrors is determining by said means and said tube, characterized in that the primary (4b; 8.1) and the secondary mirror (3; 7.2), the tube and the means for accommodating (4a, 8; 1, 1a, 1b, 1c, 7, 7.1, 7.2, 7.3, 7.4) as long as they determine or influence the spacing between said mirrors (4b, 8.1; 3, 7.2) all being made of the same material.

2. A mirror telescope according claim 1, characterized in that said material is Zerodur.

3. A mirror telescope according claim 1 or 2, characterized in that there are as a separate assembly group a front ring (1; 7) having a secondary mirror mount (1c; 7.2) formed thereon to hold the secondary mirror (3; 7.1), a base plate (4; 8) with the primary mirror (4b; 8.1), a tube (2; 10) and an ocular (5; 9).

4. A mirror telescope according claim 3, characterized in that the front ring (7) having a secondary mirror mount (7.2) and the secondary mirror (7.1) conjointly defining a single monolithic component.

5. A mirror telescope according one of the claims 1 to 4, wherein said mirror telescope is configured as a Cassegrain system.

6. A mirror telescope according one of the claims 1 to 5, characterized in that the parts (1, 2, 3, 4; 7, 8, 10) as well as the ocular (5; 9) for fixation their position to each other are cemented as long as they are not manufactured as a monolithic part.

7. A mirror telescope according one of the claims 1 to 6, characterized in that there are three contact points (2.1a, 2.2a; 10a, 10b) disposed at the ends of the tube (2; 10) respectively for fixing the spacing between the secondary mirror (3; 7.1) and the primary mirror (4b; 8.1) and for aligning said mirrors (3, 4b; 7.1, 8.1) according to a common optical axis (6; 11).

8. A mirror telescope according claim 7, characterized in that the areas on the periphery of the tube (2; 10) next to the contact points (2.1a, 2.2a; 10a, 10b) are used as cementing areas.

9. A mirror telescope according one of the claims 1 to 8, characterized in an optical receiving and transmitting means (12; 13) arranged behind the ocular (5; 9).

## Revendications

1. Télescope à miroir comprenant un miroir principal et un miroir secondaire, un tube et des moyens servant à fixer le miroir secondaire et le miroir principal au tube, la distance entre les deux miroirs étant déterminée par les moyens de fixation et par le tube, caractérisé en ce que le miroir principal (4b ; 8.1) et le miroir secondaire (3 ; 7.2), le tube et, dans la mesure où ils déterminent et influencent la distance entre les miroirs (4b, 8.1 ; 3, 7.2), les moyens de fixation (4a, 8 ; 1, 1a, 1b, 1c, 7, 7.1, 7.2, 7.3, 7.4) sont fabriqués dans le même matériau.

2. Télescope à miroir selon la revendication 1, caractérisé en ce que le matériau est le "Zérodur".

3. Télescope à miroir selon la revendication 1 ou 2, caractérisé en ce qu'il comprend, comme ensembles séparés, un anneau frontal (1 ; 7), avec la monture (1c ; 7.2) de miroir secondaire servant à tenir le miroir secondaire (3 ; 7.1), une plaque de base (4 ; 8) avec le miroir principal (4b ; 8.1), le tube (2 ; 10) et un oculaire (5 ; 9).

4. Télescope à miroir selon la revendication 3, caractérisé en ce que l'anneau frontal (7), forme une unique pièce monolithique avec la monture (7.2) du miroir secondaire et le miroir secondaire (7.1).

5. Télescope à miroir selon une des revendications 1 à 4, caractérisé en ce que le télescope à miroir est constitué par un système Cassegrain.

6. Télescope à miroir selon une des revendications 1 à 5, caractérisé en ce qu'aussi bien les éléments (1, 2, 3, 4 ; 7, 8, 10) que l'oculaire (5 ; 9) sont collés les uns aux autres pour la fixation de leur position les uns par rapport aux autres, sauf s'ils sont fabriqués ensemble sous la forme d'un élément monolithique.

7. Télescope à miroir selon une des revendications 1 à 6, caractérisé en ce qu'il est prévu trois points de contact (2.1a, 2.2a ; 10a, 10b) aux extrémités du tube (2 ; 10), points avec lesquels s'effectue la détermination de la distance entre le miroir secondaire (3 ; 7.1) et le miroir principal (4b ; 8.1) et l'alignement des deux miroirs (3, 4b ; 7.1, 8.1) sur un axe optique commun (6 ; 11).

8. Télescope à miroir selon la revendication 2, caractérisé en ce que les surfaces situées sur la circonférence du tube (2 ; 10), à côté des points de contact (2.1a, 2.2a ; 10a, 10b) sont utilisées comme surfaces de collage.

9. Télescope à miroir selon une des revendications 1 à 8, caractérisé en ce qu'un dispositif récepteur et émetteur optique (12 ; 13) est agencé en arrière de l'oculaire (5 ; 9).
